# EUROPÄISCHE PATENTANMELDUNG

(11) **EP 2 081 284 A2**
(43) Veröffentlichungstag der Anmeldung: **22.07.2009**
(21) Anmeldenummer: 07023861.3
(22) Anmeldetag: 10.12.2007
(51) Int. Cl.: H02K 15/00

(54) **Verfahren zum Löten von Leiterbündeln eines Generators**

(71) Anmelder: SIEMENS AKTIENGESELLSCHAFT, 80333 München (DE)
(72) Erfinder: Fröde, Olaf, 45476 Mülheim an der Ruhr (DE); Lohbeck-Ossowski, Sascha, 45481 Mülheim and der Ruhr (DE)

(57) **Zusammenfassung**

Ein Verfahren zum Löten von Leiterbündeln (16, 18) eines Generators (10) umfasst die Schritte: Ansetzen eines ersten Kontaktmittels (24) eines Leiterbündels (16, 18) an ein zweites Kontaktmittel (26) und Löten des ersten Kontaktmittels (24) an das zweite Kontaktmittel (26) unter Verwendung eines Lotwerkstoffes (28) und eines elektrischen Lichtbogens mit nichtabschmelzender Elektrode und einer Schutzgasatmosphäre.

## Beschreibung

Die Erfindung betrifft ein Verfahren zum Löten von Leiterbündeln eines Generators, wobei es sich bei dem Generator um eine großtechnische Anlage handelt, wie sie beispielsweise für Kraftwerke verwendet wird. Ein derartiges Verfahren wird von den beteiligten Fachkreisen auch als Bündellötung bezeichnet.

Bei Generatoren der oben genannten Art müssen Leiterbündel, insbesondere einer so genannten Oberlage und einer so genannten Unterlage, elektrisch leitend an so genannten Schaltleitungen angekoppelt werden. Die Oberlage und die Unterlage bilden Teile des Stators innerhalb des Generators. Die Leitungsbündel gehören zu den so genannten Wicklungsleitungen des Generators.

Die Lötverbindungen werden durch zwei Kontaktmittel hergestellt, die insbesondere jeweils in Form einer, auf ein einzelnes Teilleiterbündel aufgelöteten Winkellöthülse gestaltet sind.

Bei den derart an einem Generator auszubildenden Lötverbindungen sind mehrere, grundsätzlich gegensätzliche Anforderungen zu erfüllen: Die Lötverbindungen müssen kostengünstig unter besonders beengten Raumverhältnissen ausgebildet werden und zugleich hohe Qualität aufweisen. Mangelhaft gestaltete Lötverbindungen können nur mit großem Aufwand repariert werden.

Um den bestehenden beengten Raumverhältnissen im Generator gerecht werden zu können, wird bei bekannten Verfahren zum Herstellen derartigen Lötverbindungen mit induktiver Erwärmung gearbeitet. Derartige Induktivverfahren können zwar vergleichsweise kostengünstig realisiert werden, sie bedingen aber, dass die Lötung in horizontaler Lage der Kontaktmittel ausgebildet wird. Eine derartige horizontale Lage kann nur mittels einer Drehvorrichtung für den gesamten Generator im Werk bereitgestellt werden, während es im Kraftwerk bzw. am Einsatzort des Generators nicht möglich ist, den Generator auszubauen und auf einer solchen Drehvorrichtung zu platzieren. Bei Montage- und Wartungsarbeiten am Einsatzort wird daher bislang auf die herkömmliche Methode der Einzelteilleiterlötung zurückgegriffen. Diese Methode bedingt aber einen hohen manuellen Aufwand und verursacht dadurch sowohl ein Qualitätsrisiko als auch entsprechend hohe Kosten.

Es ist eine Aufgabe der Erfindung, ein Verfahren zum Löten von Leiterbündeln eines Generators bereitzustellen, bei dem die genannten Bündellötungen auch am Einsatzort des Generators kostengünstig hergestellt werden können.

Die Aufgabe ist erfindungsgemäß mit einem Verfahren zum Löten von Leiterbündeln eines Generators gemäß Anspruch 1 sowie der Verwendung eines elektrischen Lichtbogens mit nicht abschmelzender Elektrode und einer Schutzgasatmosphäre gemäß Anspruch 4 gelöst. Vorteilhafte Weiterbildungen der erfindungsgemäßen Lösung sind in den abhängigen Ansprüchen beschrieben.

Gemäß dem erfindungsgemäßen Verfahren zum Löten von Leiterbündeln eines Generators werden die folgenden Schritte ausgeführt: Ansetzen eines ersten Kontaktmittels eines Leiterbündels an ein zweites Kontaktmittel und Löten des ersten Kontaktmittels an das zweite Kontaktmittel unter Verwendung eines Lotwerkstoffes und eines elektrischen Lichtbogens mit nicht abschmelzender Elektrode und einer Schutzgasatmosphäre.

Mit anderen Worten wird erfindungsgemäß die Wärme für den Lötprozess der Bündellötung an einem Generator durch einen Lichtbogen einer nicht abschmelzenden Elektrode und durch gleichzeitige Bereitstellung einer Schutzgasatmosphäre an den Kontaktmitteln des zugehörigen Leiterbündels eingebracht. Der Lichtbogen und die Schutzgasatmosphäre werden erfindungsgemäß bevorzugt mit einem Wolfram-Inert-Gas-Schweißgerät (WIG-Schweißgerät) bereitgestellt.

Ferner ist die erfindungsgemäße Lösung durch Verwendung eines elektrischen Lichtbogens mit nicht abschmelzender Elektrode und einer Schutzgasatmosphäre zum Löten von Leiterbündeln eines Generators gelöst. Dabei wird ebenfalls bevorzugt der Lichtbogen und die Schutzgasatmosphäre mit Hilfe eines WIG-Schweißgeräts erzeugt.

Die erfindungsgemäße Vorgehensweise zum Löten von Leiterbündeln eines Generators bzw. zum Herstellen der so genannten Bündellötung birgt den Vorteil, dass sie grundsätzlich in jeder Lage der Kontaktmittel durchgeführt werden kann und es daher für die jeweilige Lötung keiner Drehvorrichtung bedarf. Das erfindungsgemäße Verfahren reduziert dadurch nicht nur die Kosten einer Lötung am Einsatzort eines Generators, sondern gegebenenfalls auch bei dessen Herstellung im Werk.

Ferner birgt die erfindungsgemäße Lösung den Vorteil, dass es an den Kontaktmitteln nur zu einer kurzen Erwärmung kommt, so dass dort nur eine geringe Materialbeanspruchung durch Wärmespannungen erzeugt wird.

Darüber hinaus können mit dem erfindungsgemäßen Verfahren erheblich kürzere Durchlaufzeiten für die Lötungen erzielt werden. Insgesamt wird dadurch eine Zeit- und Kostenersparnis erreicht.

Schließlich ist an der erfindungsgemäßen Lösung auch vorteilhaft, dass es aufgrund der Schutzgasatmosphäre zu keiner Wasserstoffversprödung an der Lötstelle kommen kann. Auch können Isolationen von weiteren Bauteilen des Generators aufgrund einer erfindungsgemäß zeitlich sehr begrenzten Temperatureindringung nicht beschädigt werden.

Schließlich ist anzumerken, dass die erfindungsgemäße Lötung eine hohe Zugfestigkeit aufweist.

Erfindungsgemäß bevorzugt wird zum Löten der Leiterbündel zwischen das erste und das zweite Kontaktmittel als Lotwerkstoff eine Lotfolie eingelegt, die mit Hilfe des elektrischen Lichtbogens aufgeschmolzen wird.

Ferner wird erfindungsgemäß bevorzugt, dass das erste Kontaktmittel mit dem zweiten Kontaktmittel verspannt wird, wobei zuvor zwischen den Kontraktmitteln insbesondere die oben genannte Lotfolie eingelegt worden ist. Zum Verspannen der Kontaktmittel wird bevorzugt eine Zange, etwa in Gestalt einer Schraubzwinge, außenseitig auf die Kontaktmittel montiert.

Nachfolgend wird ein Ausführungsbeispiel der erfindungsgemäßen Lösung anhand der beigefügten schematischen Zeichnungen näher erläutert. Es zeigt:
Fig. 1 einen Längsschnitt eines Generators mit darin erfindungsgemäß ausgebildeten Lötverbindungen bzw. Bündellötungen,
Fig. 2 das Detail II in Figur 1,

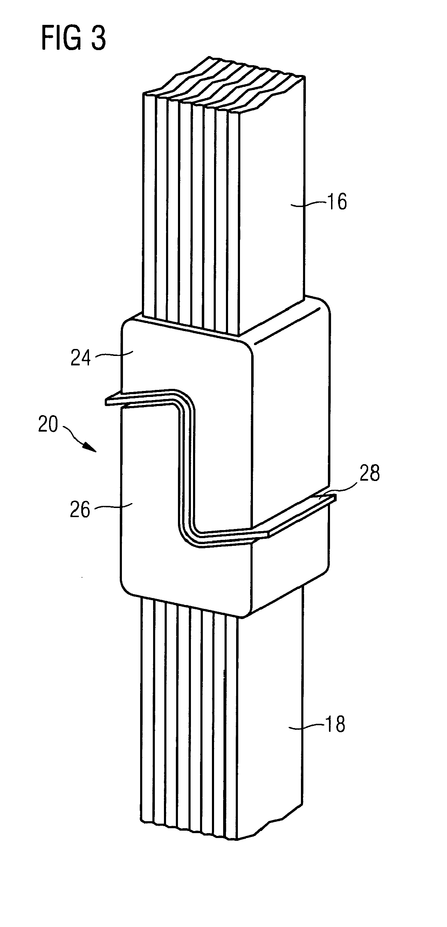

Fig. 3 eine perspektivische Ansicht einer erfindungsgemäß gestalteten Lötverbindung vor dem eigentlichen Lötvorgang,
Fig. 4 eine perspektivische Ansicht einer erfindungsgemäßen Lötstelle mit daran angesetzter Lötzange,
Fig. 5 eine perspektivische Ansicht einer erfindungsgemäßen Lötstelle während des Vorgangs des Lötens,
Fig. 6 eine perspektivische Ansicht einer erfindungsgemäßen Lötstelle unter Veranschaulichung der dortigen Platzverhältnisse,
Fig. 7 eine perspektivische Ansicht eines Generators gemäß Fig. 1 mit mehreren daran auszubildenden erfindungsgemäßen Lötverbindungen und
Fig. 8 eine perspektivische Ansicht von mehreren erfindungsgemäß ausgebildeten Lötverbindungen.

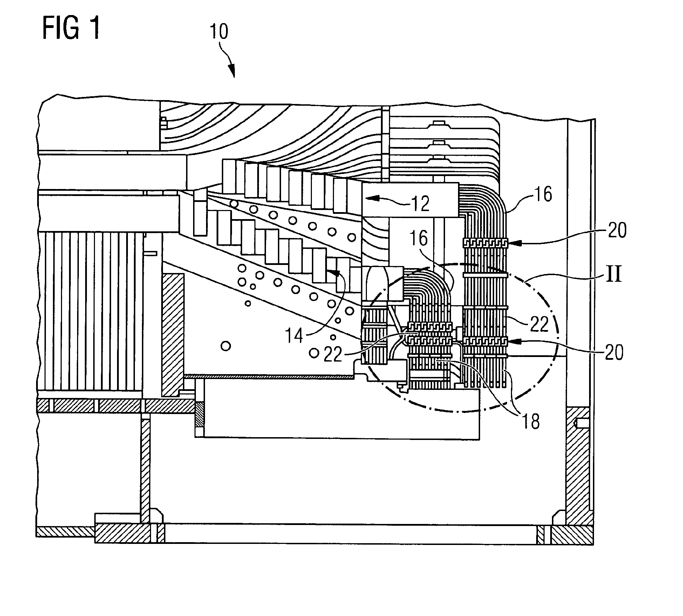

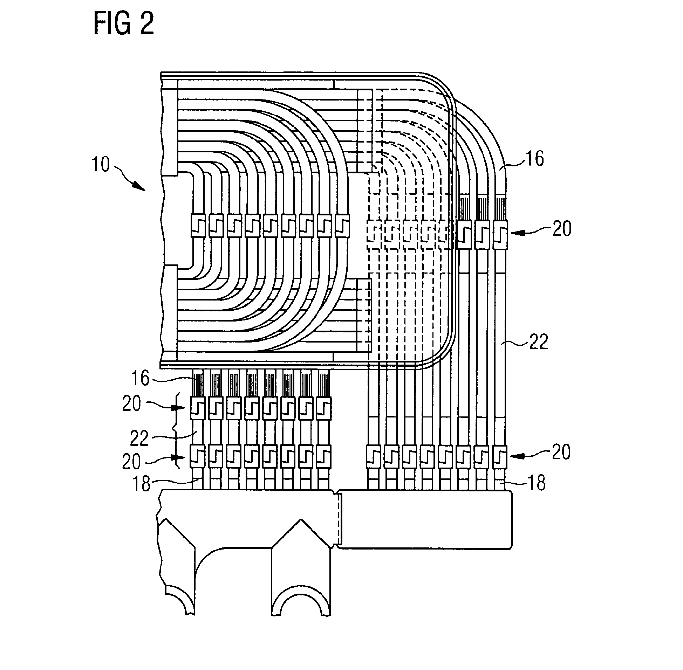

Die Fig. 1 und 2 zeigen im Längsschnitt einen Generator 10, der als wesentliche Bauteile eine so genannte Oberlage 12 und eine Unterlage 14 aufweist, mit denen der (weiter nicht veranschaulichte) Stator des Generators 10 gebildet ist. Die Oberlage 12 und die Unterlage 14 sind mit Teilleiter-Bündeln 16 an zugehörigen Schaltleitungen 18 elektrisch angekoppelt.

Die elektrische Ankopplung ist mit Hilfe von Kontaktstellen 20 und Massivkupfer-Stäben 22 gebildet, welche jeweils zwischen den Teilleiter-Bündeln 16 und der zugehörigen Schaltleitung 18 elektrisch leitend zwischengekoppelt sind.

An den Kontaktstellen 20 sind jeweils zwei Kontaktmittel 24 und 26 vorgesehen, welche einzeln gewinkelt bzw. h-förmig gestaltet und gegeneinander gelegt angeordnet sind. Zwischen den Kontaktmitteln 24 und 26 ist als ein Lotwerkstoff 28 jeweils eine Lotfolie eingelegt, welche die gesamte Fläche zwischen den beiden Kontaktmitteln 24 und 26 überdeckt.

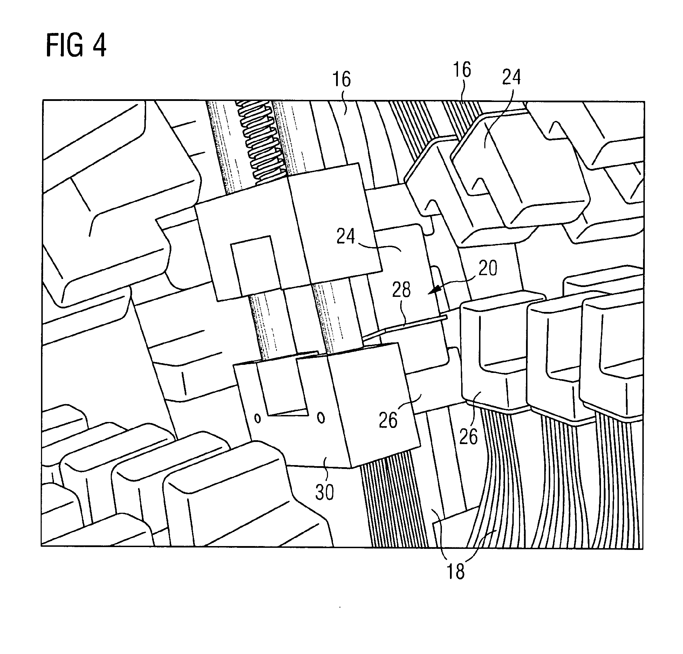

Die Kontaktmittel 24 und 26 sind gegeneinander mit Hilfe einer Zange 30 zusammengepresst und in dieser Form für den eigentlichen Lötvorgang vorbereitet (siehe Fig. 4).

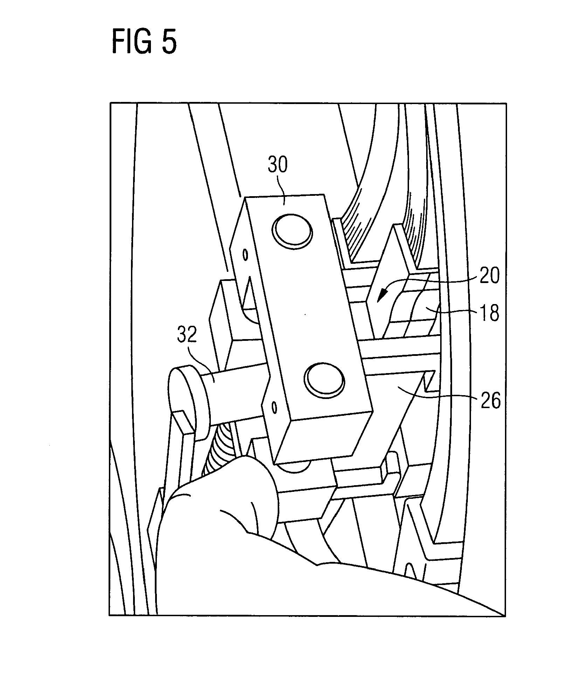

In Fig. 5 ist veranschaulicht, wie während des erfindungsgemäßen Lötens an den derart angeordneten Kontaktmitteln 24 und 26 und der daran angeordneten Zange 30 unter sehr beengten Platzverhältnissen mit Hilfe eines WIG-Schweißapparats 32 mittels einer nicht abschmelzender Elektrode ein elektrischer Lichtbogen und eine Schutzgasatmosphäre erzeugt werden und dadurch derart Wärme an den Kontaktmitteln 24 und 26 eingebracht wird, dass der Lotwerkstoff 28 schmilzt. Der eigentliche Lichtbogen ist dabei in der Darstellung gemäß Fig. 5 von der dort gezeigten Zange 30 verdeckt.

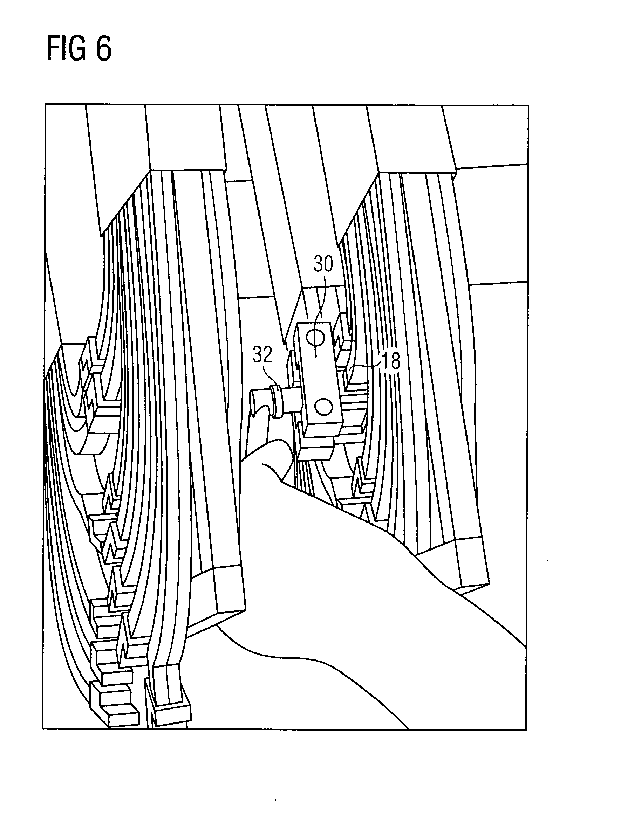

In Fig. 6 sind nochmals die sehr beengten Platzverhältnisse während des derartigen Lötens veranschaulicht.

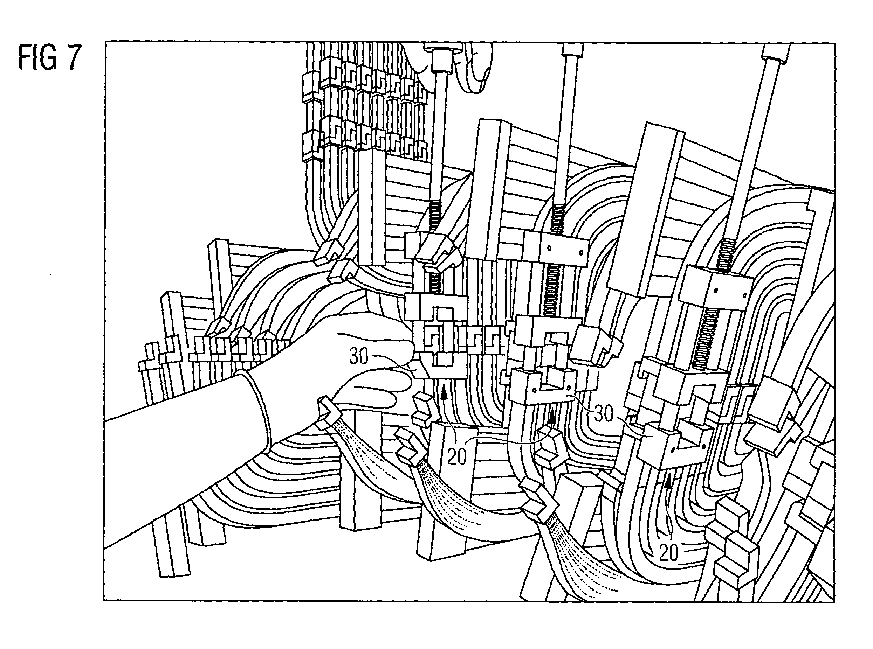

Fig. 7 zeigt, dass das derartige Löten von Kontaktmitteln 24 und 26 an einem Generator 10 in großer Anzahl durchgeführt werden muss.

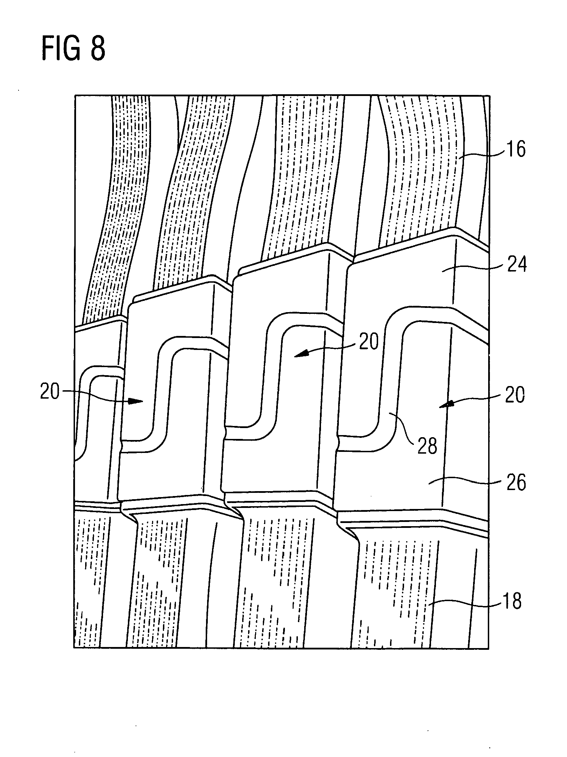

Fig. 8 veranschaulicht schließlich nochmals einige fertige Lötverbindungen bzw. Bündellötungen zwischen Teilleiterbündeln 16 und Schaltleitungen 18 mit ihren Kontaktmitteln 24, Kontaktmitteln 26 und dazwischen aufgeschmolzenenen Lotwerkstoffen 28.

## Patentansprüche

1. Verfahren zum Löten von Leiterbündeln (16, 18) eines Generators (10) mit den Schritten:
Ansetzen eines ersten Kontaktmittels (24) eines Leiterbündels (16, 18) an ein zweites Kontaktmittel (26) und
Löten des ersten Kontaktmittels (24) an das zweite Kontaktmittel (26) unter Verwendung eines Lotwerkstoffes (28) und eines elektrischen Lichtbogens mit nichtabschmelzender Elektrode und einer Schutzgasatmosphäre.

2. Verfahren zum Löten von Leiterbündeln eines Generators nach Anspruch 1 mit den Schritten: Einlegen einer Lotfolie als Lotwerkstoff (28) zwischen das erste und das zweite Kontaktmittel (24; 26) und Aufschmelzen der Lotfolie mit Hilfe des elektrischen Lichtbogens.

3. Verfahren zum Löten von Leiterbündeln eines Generators nach Anspruch 1 oder 2 mit dem Schritt: Verspannen des ersten Kontaktmittels (24) mit dem zweiten Kontaktmittel (26), insbesondere mit dazwischen eingelegter Lotfolie.

4. Verwendung eines elektrischen Lichtbogens mit nichtabschmelzender Elektrode und einer Schutzgasatmosphäre zum Löten von Leiterbündeln (16, 18) eines Generators (10).
